(19) Europäisches Patentamt
European Patent Office
Office européen des brevets

(11) Veröffentlichungsnummer: **0 493 694 B1**

# (12) EUROPÄISCHE PATENTSCHRIFT

(45) Veröffentlichungstag der Patentschrift: **24.08.94**

(21) Anmeldenummer: **91120704.1**

(22) Anmeldetag: **02.12.91**

(51) Int. Cl.5: **C08L 77/00**, C08L 77/06, C08L 33/26, C08L 41/00, //(C08L77/00,33:26),(C08L33/26, 77:00)

## (54) Polymermischungen aus Polyamiden und Polymerisaten mit Sulfonamid-Struktureinheiten.

(30) Priorität: **14.12.90 DE 4040025**

(43) Veröffentlichungstag der Anmeldung:
**08.07.92 Patentblatt 92/28**

(45) Bekanntmachung des Hinweises auf die Patenterteilung:
**24.08.94 Patentblatt 94/34**

(84) Benannte Vertragsstaaten:
**DE FR GB IT**

(56) Entgegenhaltungen:

**Keine Entgegenhaltungen.**

(73) Patentinhaber: **BAYER AG**

**D-51368 Leverkusen (DE)**

(72) Erfinder: **Heger, Georg, Dr.**
**Uerdinger Strasse 260**
**W-4150 Krefeld (DE)**
Erfinder: **Lütjens, Holger, Dr.**
**Rybniker Strasse 12**
**W-5000 Köln 80 (DE)**
Erfinder: **Fengler, Gerd, Dr.**
**Deutschordensweg 12**
**W-4150 Krefeld (DE)**
Erfinder: **Lindner, Christian, Dr.**
**Im Wasserblech 11**
**W-5000 Köln 80 (DE)**

EP 0 493 694 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft verbesserte Polymermischungen aus Polyamiden und Vinylpolymerisaten, die Sulfonamid-Struktureinheiten enthalten. Es werden so Polyamidformmassen mit verminderter Wasseraufnahme und verbesserter Dimensionsstabilität bei Erhalt guter mechanischer Eigenschaften, wie Schlagzähigkeit und Steifigkeit sowie geringer Verfärbung, gute Wärmeformbeständigkeit und Migrationsbeständigkeit erhalten.

Die Polyamide nehmen wegen ihrer guten mechanischen und physikalischen Eigenschaften als wichtige Konstruktionswerkstoffe einen festen Platz in der Technik ein. Eine Besonderheit der Polyamide ist ihre verhältnismäßig hohe Wasseraufnahme.

Ursache der Wasseraufnahme sind die Carbonsäureamidgruppen. Durch ihre hohe Polarität zeigen sie eine besondere Affinität zu Wasser. Die Wasseraufnahme - sie erfolgt nicht nur bei Wasserlagerung von Polyamid-Form teilen, sondern auch, wenn diese feuchter Luft ausgesetzt sind - steht in unmittelbarem Zusammenhang mit der Anzahl der Carbonsäureamidgruppen im Polymermolekül. Besonders betroffen sind die technischen Thermoplaste, wie Polyamid-6, -46 und -66.

Das in die amorphen Bereiche des Polyamids eingedrungene Wasser lockert die Wasserstoffbrücken im Polymeren, indem es selbst Wasserstoffbrücken zwischen den Carbonsäureamidgruppen ausbildet. Hierdurch werden alle mechanischen und physikalischen Eigenschaften (Weichmachung des Werkstoffs) beeinflußt.

Wichtige anwendungstechnische Eigenschaften, wie z.B. die Zähigkeit, Reißdehnung, elektrische Durchschlagfestigkeit und der E-Modul hängen stark von der Wasseraufnahme ab. Durch die Wasseraufnahme werden bestimmte Polyamid-Eigenschaften verbessert, andere hingegen verschlechtert. So wird zwar die Schlagzähigkeit erhöht, zugleich aber die Steifigkeit und elektrische Durchschlagfestigkeit im Vergleich zu spritzfrischen Teilen verringert.

Eine weitere Folge der Wasseraufnahme ist eine nicht ausreichende Maßhaltigkeit der Formkörper. Dabei können lediglich die bei kurzfristigem Kontakt mit Wasser auftretenden Maßänderungen durch Trocknen wieder rückgängig gemacht werden, während länger einwirkende Feuchtigkeit zu stetigem irreparablen Dimensionsänderungen der Formkörper führt.

Durch Konditionieren mit Wasser kann die mangelhafte Maßhaltigkeit von Formteilen zwar deutlich verbessert werden, parallel dazu tritt aber - wie oben beschrieben - eine Verschlechterung in den mechanischen Werten ein.

Die Einhaltung beziehungsweise Verbesserung der Steifigkeit und Dimensionstabilität von Polyamid-Formteilen ist aber eine wichtige Forderung, wenn sie tragende oder festigkeitsunterstützende Wirkung haben sollen, wie dies zum Beispiel im Kraftfahrzeug-, Geräte-, Apparate- oder Maschinenbau der Fall ist.

Eine bekannte Möglichkeit zur Verringerung der Wasseraufnahmefähigkeit von Polyamiden ist der Zusatz bekannter niedermolarer Polyamidweichmacher, beispielsweise spezieller Phenole (siehe DE 3 248 329) oder spezieller aromatischer Amine (s. EP 166 321). Nachteile dieser Additive sind ihr Mangel an Migrationsbeständigkeit, zu geringe Verarbeitungsstabilität und die große Flüchtigkeit, die bei Einarbeitung zu Geruchsbelästigungen führen kann.

Es wurde nun gefunden, daß der Zusatz von Vinylpolymerisaten mit Sulfonamidstruktureinheiten in Polyamiden zu einer Verminderung der Wasseraufnahme bei guten mechanischen Eigenschaften, wie Zähigkeit und Steifigkeit und hoher Dimensionsstabilität führt. Gleichzeitig zeichnen sich die neuen Formmassen durch Migrationsbeständigkeit, niedrigen Gehalt an flüchtigen Komponenten, geringe Verfärbungen, Auswaschbeständigkeit gegenüber Lösungsmitteln, hohe Alterungsbeständigkeit und gute Wärmeformbeständigkeit aus.

Gegenstand der Erfindung sind somit:

Polymermischungen enthaltend

A) ein Polyamid A) und

B) ein Homo- oder Copolymerisat B) aus einem radikalisch polymerisierbaren Sulfonamidmonomeren und gegebenenfalls weiteren sulfonamidfreien Vinylmonomeren

Ein weiterer Gegenstand der Erfindung ist die Verwendung der Polymermischungen aus den Komponenten A) und B) zur Herstellung von thermoplastischen Formmassen.

Als Polyamid-Komponente A) der erfindungsgemäßen Polymermischungen eignen sich alle teilkristallinen Polyamide, insbesondere Polyamid-6, Polyamid-6,6, Polyamid-4,6 sowie Mischungen und teilkristalline Copolyamide auf Basis dieser Komponenten. Weiterhin kommen teilkristalline Polyamide in Betracht, deren Säurekomponente insbesondere ganz oder teilweise (neben Adipinsäure bzw. -Caprolactam) Terephthalsäure und/oder Isopthalsäure und/oder Korksäure und/oder Sebacinbsäure und/oder Azelainsäure und/oder Dodecandicarbonsäure und/oder Adipinsäure und/oder einer Cyclohexandicarbonsäure besteht, und deren

Diaminkomponenten ganz oder teilweise insbesondere aus m- und/oder p-Xylylendiamin und/oder Tetramethylendiamin und/oder Hexamethylendiamin und/oder 2,2,4- und/oder 2,4,4-Trimethylhexamethylendiamin und/oder Isophorondiamin besteht, und deren Zusammensetzungen aus dem Stand der Technik bekannt sind.

Außerdem sind teilkristalline Polyamide zu nennen, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide A) sind Polyamid-6 und Polyamid-6,6, ihre Mischungen oder Copolyamide mit nur geringen Anteilen (bis etwa 10 Gew.-%) der Co-Komponenten. Es können als Polyamidkomponente A) auch amorphe Polyamide eingesetzt werden. Sie werden erhalten durch Polykondensation von Diaminen, beispielsweise Ethylendiamin, Tetramethylendiamin, Hexamethylendiamin, Decamethylendiamin, 2,2,4- und/oder 2,4,4-Trimethylhexamethylendiamin, m- und/oder p-Xylylendiamin, Bis-(4-aminocyclohexyl)-methan oder Gemischen aus 4,4'- oder 2,2'-Diaminodicyclohexylmethanen, 2,2-Bis-(4-aminocyclohexyl)-propan, 3,3'-Dimethyl-4,4'-diamino-dicyclohexylmethan, 3-Aminoethyl-3,5,5,-trimethyl-cyclohexylamin, 2,5- und/oder 2,6-Bis (aminomethyl)-norbornan und/oder 1,4-Diaminomethylclohexan, mit Dicarbonsäuren, beispielsweise Oxalsäure, Adipinsäure, Azelainsäure, Decandicarbonsäure, Heptadecandicarbonsäure, 2,2,4- und/oder 2,4,4-Trimethyladipinsäure, Isophthalsäure oder geringen Mengen an Terephthalsäure. Selbstverständlich sind auch amorphe Copolymere, die durch Polykondensation mehrere Monomere erhalten werden, geeignet, ferner solche Copolymere, die unter Zusatz von Aminocarbonsäuren, wie ω-Aminocapronsäure, ω-Aminoundecansäure oder ω-Aminolaurinsäure oder ihren Lactamen, hergestellt werden.

Besonders geeignete amorphe Polyamide sind die Polyamide, hergestellt aus Isophthalsäure, Hexamethylendiamin und weiteren Diaminen, wie 4,4'-Diaminodicyclohexylmethan, Isophorondiamin, 2,2,4-und/oder 2,2,4-Trimethylhexamethylendiamin, 2,5- und/oder 2,6-Bis-(aminomethyl)-norbonan; oder aus Isophthalsäure, 4,4'-Diamino-dicyclo-hexylmethan und ε-Caprolactam; oder aus Isophthalsäure, 3,3'-Dimethyl-4,4'-diamino-dicyclo-hexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diamino-dicyclohexylmethans können auch Gemische der stellungsisomeren Diaminodicyclohexylmethane eingesetzt werden, die sich aus:

70 bis 99 Mol-% des 4,4'-Diaminoisomeren
0 bis 30 Mol-% des 2,4'-Diaminoisomeren
0 bis 2 Mol-% des 2,2'-Diaminoisomeren

und gegebenenfalls entsprechend höherkondensierten Diaminen, die durch Hydrierung von Diaminophenylmethan technischer Qualität erhalten werden.

Als Komponente B) der erfindungsgemäßen Polymermischungen sind Homo- oder Copolymerisate aus einem radikalisch polymerisierbaren Sulfonamidmonomeren und gegebenenfalls weiteren sulfonamidfreien Vinylmonomeren geeignet. Sulfonamidmonomere sind hierbei Vinylmonomere mit Struktureinheiten der Formel (I).

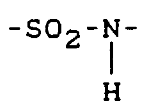

(I)

Bevorzugt sind Sulfonamidmonomere, die Vinylmonomere der Formel (II) und (III) darstellen.

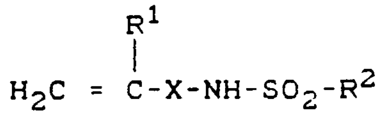

(II)

mit

- $R^1$ = H, Methyl
- X = Einfachbindung, $C_1$-$C_8$-Alkylen, zweiwertiger aromatischer Kohlenwasserstoffrest mit 6 - 25 Kohlenstoffatomen,

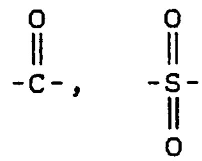

$R^2$ = $C_1$-$C_{12}$-Alkyl, einwertiger aromatischer Kohlenwasserstoffrest mit 6 - 25 Kohlenstoff atomen

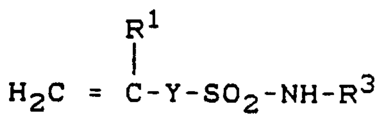 (III)

mit

$R^1$ = H, Methyl

Y = Einfachbindung, $C_1$-$C_8$-Alkylen, zweiwertiger aromatischer Kohlenwasserstoffrest mit 6 - 25 Kohlenstoffatomen

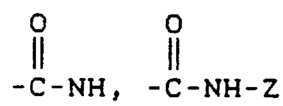

mit Z als zweiwertigen aromatischen Kohlenwasserstoffrest mit 6 - 25 Kohlenstoffatomen,

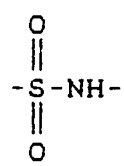

$R^3$ = Wasserstoff, $C_1$-$C_{12}$-Alkyl, einwertiger aromatischer Kohlenwasserstoffrest mit 6 - 25 Kohlenstoffatomen,

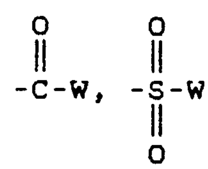

wobei

W = $C_1$-$C_{12}$-Alkyl oder ein einwertiger aromatischer Kohlenwasserstoffrest mit 6 - 25 Kohlenstoff atomen ist.

Besonders bevorzugt sind Vinylmonomere der Formel (II) und (III) mit

$R^1$ = H, $CH_3$

X = Einfachbindung, $C_1$-$C_4$-Alkylen, zweiwertiger aromatischer Kohlenwasserstoffrest mit 6 - 15 Kohlenstoffatomen, insbesondere bevorzugt 6 - 9 Kohlenstoffatomen,

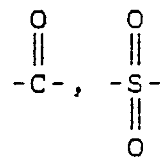

$R^2$ = $C_1$-$C_8$-Alkyl, insbesondere bevorzugt $C_1$-$C_4$-Alkyl, einwertiger aromatischer Kohlenwasserstoffrest mit 6 - 15 Kohlenstoffatomen, insbesondere bevorzugt 6 - 9 Kohlenstoffatomen

Y = Einfachbindung, $C_1$-$C_4$-Alkylen, zweiwertiger aromatischer Kohlenwasserstoffrest mit 6 - 15 Kohlenwasserstoffrest, insbesondere bevorzugt 6 - 9 Kohlenstoffatomen,

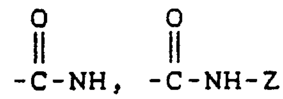

mit Z als zweiwertigen aromatischen Kohlenwasserstoff rest mit 6 - 15 Kohlenstoffatomen, insbesondere bevorzugt 6 - 9 Kohlenstoffatomen,

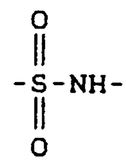

$R^3$ = Wasserstoff, $C_1$-$C_8$-Alkyl, insbesonder bevorzugt $C_1$-$C_4$-Alkyl, einwertiger Kohlenwasser stoffrest mir 6 - 15 Kohlenstoffatomen, insbesondere bevorzugt 6 - 9 Kohlenstoffatomen,

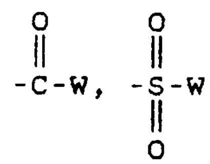

wobei

W = $C_1$-$C_8$-Alkyl, insbesondere bevorzugt $C_1$-$C_4$-Alkyl oder ein einwertiger aromatischer Kohlenwasserstoffrest mit 6 - 15 Kohlenstoffatomen, insbesondere bevorzugt 6 - 9 Kohlen stoffatomen ist.

Geeignete Sulfonamidmonomere gemäß Formel (II) und (III) sind beispielsweise:

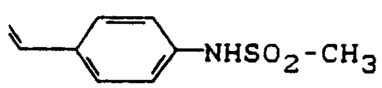 , 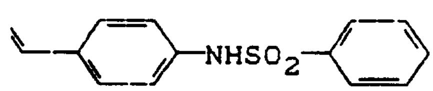 ,

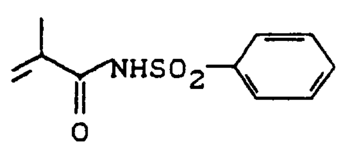 , 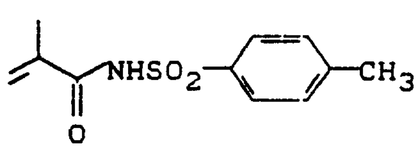

$CH_2 = CHSO_2NH_2$, $CH_2 = CHSO_2\text{-}NHC_2H_5$,
$CH_2 = CHSO_2\text{-}NH(i\text{-}C_3H_7)$, $CH_2 = CHSO_2NH(n\text{-}C_4H_9)$,
$CH_2 = CHSO_2\text{-}NH(n\text{-}C_6H_{13})$,

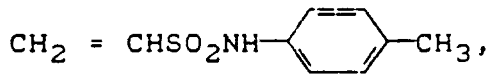

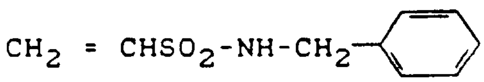 , 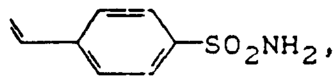

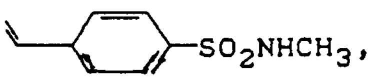 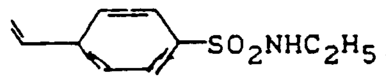 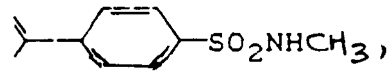

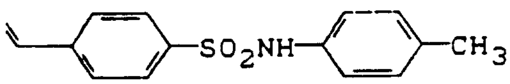 , 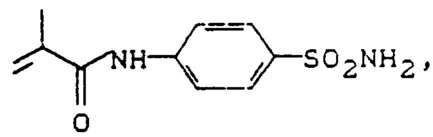

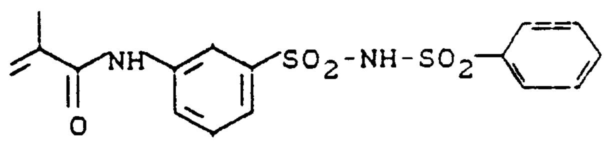

Unter sulfonamidfreien Vinylmonomeren sind zu verstehen:

a) Vinylverbindungen, wie Styrol, α-Methylstyrol, Halogenstyrole, Methoxystyrole,

b) Vinylhalogenide, wie Vinylchlorid, Vinylfluorid, Vinylidenchlorid,

c) Vinylalkylketone, wie Vinylmethylketon,

d) Vinylester organischer Säuren, wie z.b. Vinylacetat, Vinylbutyrat, Vinylpropionat,

e) α, β-ungesättigte Carbonsäuren, wie Acrylsäure, Methacrylsäure, Itaconsäure, Maleinsäure,

f) Derivate der Acrylsäure und der Methacrylsäure, wie Acrylnitril, Methacrylnitril, Acrylsäureamid, Methacrylsäureamid, N-Methylolacrylamid, N-Methylolmethacrylamid, Dimethylaminopropylamid,

g) $C_1$-$C_{14}$-Alkylacrylate, wie Methyl-, Ethyl-, n-, iso- oder tertiär-Butyl-, Octyl-, 2-Ethylhexylacrylat, Chlorethylacrylat, Benzylacrylat, Phenylethylacrylat;

h) polymerisierbare Olefine und Diene, wie Isobutylen, Butadien, Isopropen, Propylen, Chloropren oder beispielsweise auch

i) Vinylalkylether.

Die Homo- oder Copolymerisate B) enthalten bevorzugt Struktureinheiten der Formel (IV) und/oder (V) in Mengen von 1-100 Gew.-%, bevorzugt 5 - 100 Gew.-%.

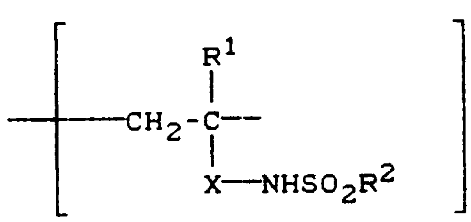 (IV)

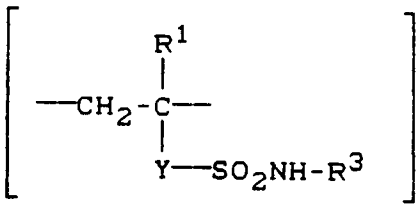

(V)

Worin $R^1$, X, $R^2$, Y, $R^3$ die unter den Formeln (II) und (III) genannte Bedeutung haben.

Die Homo- oder Copolymerisate B) können in an sich bekannter Weise durch Polymerisation aus einem radikalisch polymerisierbaren Sulfonamidmonomeren mit Struktureinheiten der Formel (I), vorzugsweise Sulfonamidmonomere gemäß Formel (II) und (III) und gegebenenfalls den obengenannten sulfonamidfreien Vinylmonomeren hergestellt werden.

Die Polymerisation wird bevorzugt als Lösungs-, Suspensions- oder Emulsionspolymerisation und bevorzugt in Gegenwart radikalischer Initiatoren durchgeführt. Geeignete radikalische Initiatoren sind beispielsweise azogruppenhaltige Verbindungen, wie Azoisobutyrodinitril, 4,4-Azobis-(4-cyanovaleriansäure), organische Peroxide, wie Benzoylperoxid, tert.-Butylhydroperoxid, Dibenzoylperoxid und anorganische Peroxidsalze, wie Kaliumperoxodisulfat, Ammoniumperoxodisulfat.

Wird die Polymerisation in Lösung vorgenommen, können Lösungsmittel verwendet werden, in denen nur die Monomeren löslich sind oder solche, in denen die Monomeren und die Polymerisate löslich sind. Geeignete organische Lösungsmittel sind beispielsweise Butanol, Methylethylketon, Ethylbenzol.

Wird die Polymerisation in (wäßriger) Emulsion durchgeführt, werden die Monomeren zweckmäßig mit Hilfe von Emulgatoren z.B. anionaktiven, kationaktiven oder nichtionogenen Emulgatoren emulgiert, beispielsweise mit Natrium-, Kalium, Ammonium-Salzen von Fettsäuren, Natriumlaurylsulfat, Natriumsalz von $C_{14}$-$C_{18}$-Alkylsulfonsäuren, Oleyl- oder Octadecykalkohol.

Polymerisiert wird vorteilhaft bei erhöhter Temperatur z.B. bei +30 bis +90°C, insbesondere bei +60 bis +85°C. Das Molekulargewicht der Homo- oder Copolymerisate B) kann in bekannter Weise durch Polymerisationstemperatur, Monomeren-Konzentration, Katalysatormenge und durch Molekulargewichtsregler eingestellt werden. Bevorzugte Molekulargewichtsregler sind Organoschwefelverbindungen, z.B. Mecaptane oder Disulfide, insbesondere langkettige Mercaptane, wie n- und tert.-Dodecylmercaptane. Sie werden normalerweise im Monomer gelöst. Die Molekulargewichte $\overline{M}_w$ (Gewichtsmittel) der erfindungsgemäßen Polymerisate (durch Lichtstreuung oder Sedimentation ermittelt) sind 1.000 bis 5.000.000 g/Mol.

Die erfindungsgemäßen Polymermischungen enthalten die Komponente A) zu 70 - 99 Gew.-% und die Komponente B) zu 30 - 1 Gew.-%.

Vorzugsweise ist die Komponente A) zu 85 - 97,5 und Komponente B) zu 15 - 2,5 Gew.-% enthalten.

Den erfindungsgemäßen Mischungen können ebenfalls noch übliche Additive hinzugegeben werden, wie z.B. Gleit-und Entformungsmittel, Nukleierungsmittel, Weichmacher, Stabilisatoren, Flammfest-Additive, Füll- und Verstärkungsstoffe, Farbstoffe sowie Thermostabilisatoren, Antioxidantien und/oder Lichtschutzmittel.

Die Herstellung der erfindungsgemäßen Formmassen kann durch Vermischen der Komponenten in üblichen Mischaggregaten wie Walzen, Knetern, Ein- oder Mehrwellenextrudern erfolgen.

Die erfindungsgemäßen Polymermischungen sind geeignet zur Herstellung von Formkörpern aller Art mit den Methoden der thermoplastischen Formgebung, wie Extrusion und Spritzguß.

## Beispiele

1) Verwendete Komponenten:

A) Polyamid-6 mit einer relativen Viskosität von 3,0 (gemessen an einer 1 Gew.-%igen Lösung in m-Kresol bei 25°C)

B) Sulfonamidpolymere:

B1) Homopolymerisat, hergestellt durch Lösungspoly merisation des Monomers der Formel (IIa) in Methylethylketon

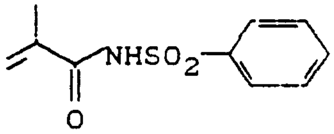
(IIa)

[η] DMF = 0,45 dl/g

[η] = Intrinsic-Viskosität, gemessen in Dimethylformamid bei 25 °C

B2) Copolymerisat, hergestellt durch Lösungspoly merisation einer Monomermischung aus Methylmethacrylat und dem Monomer der Formel (IIa) im Gewichtsverhältnis 85 : 15 in Methylethylketon.

[η] DMF = 0,42 dl/g

B3) Homopolymerisat, hergestellt durch Lösungspoly merisation des Monomers der Formel (IIIa) in Dimethylacetamid

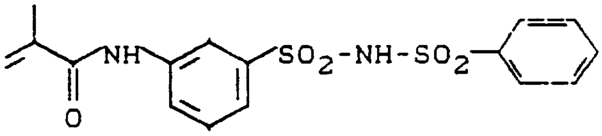
(IIIa)

[η] DMF = 0,38 dl/g

B4) Copolymerisat, hergestellt durch Lösungspolymerisation einer Monomermischung aus Methylmethacrylat und dem Monomer der Formel (IIIa) im Gewichtsverhältnis 85:15 in Methylethylketon.

[η] DMF = 0,36 dl/g

B5) Copolymerisat, hergestellt durch Lösungspolymerisation in Methylethylketon einer Monomermischung von Methylmethacrylat und dem Monomer der Formel (IIIa) in einem Gewichtsverhältnis von 70:30.

[η] in DMF = 0,40 dl/g

2) Herstellung und Prüfung der Formmassen

Auf einem kontinuierlich arbeitenden Doppelwellenextruder wurde das Polyamid A) aufgeschmolzen, zu der Schmelze die Komponente B) zudosiert und in der Schmelze homogenisiert. Die Zylindertemperaturen wurden so gewählt, daß Massetemperaturen von 270 bis 320 °C eingehalten wurden. Der Schmelzestrang wird vor Austritt aus der Düse entgast, in Wasser abgeleitet, granuliert und getrocknet.

Von den Formmassen wurden auf einer üblichen Spritzgußmaschine 80 mm x 10 mm x 4 mm Prüfstäbe hergestellt. Geprüft wurden der Biege-E-Modul spritzfrisch und konditioniert (DIN 53 457), die Kerbschlagzähigkeit nach Izod, spritzfrisch und konditioniert, (ISO 180) und die VICAT-Erweichungstemperatur VST/B (DIN 53 460). Die Wasseraufnahme wurde nach 21-tägiger Lagerung in 40 °C warmen Wasser und nach Lagerung bei 70 °C und 62 % rel. Luftfeuchtigkeit (ISO 1110) gravimetrisch ermittelt.

Die Zusammensetzung der Formmassen sind in Tabelle 1 angegeben, die Prüfergebnisse in Tabelle 2.

Die erfindungsgemäßen Formmassen zeichnen sich durch verringerte Wasseraufnahme und hohe Dimensionsstabilität, Migrationsbeständigkeit der Komponente B) sowie eine helle Eigenfarbe aus.

Tabelle 1

| Zusammensetzung der Formmassen (Gew.-%) | | | | | | |
|---|---|---|---|---|---|---|
| Beispiel Nr. | A | Komponenten | | | | |
| | | B1 | B2 | B3 | B4 | B5 |
| 1 (Vergleich) | 100 | - | - | - | - | - |
| 2*(Vergleich) | 95 | - | - | - | - | - |
| 3 erfindungsg. | 95 | 5 | - | - | - | - |
| 4 erfindungsg. | 95 | - | 5 | - | - | - |
| 5 erfindungsg. | 95 | - | - | 5 | - | - |
| 6 erfindungsg. | 95 | - | - | - | 5 | - |
| 7 | 90 | - | - | 10 | - | - |
| 8 | 90 | - | - | - | - | 10 |

* Vergleichsversuch mit 5 Gew.-% Bisphenol A

Tabelle 2: Prüfergebnisse der Formmassen

| Beispiel Nr. | Biege-E-Modul [MPa] | $a_K$ # (spr.) [kJ/m²] | Vicat-B [°C] | maximale Wasseraufnahme bei Wasserlagerung [%] | Farbe | Biege-E-Modul+ [MPa] | $a_K$ # (kond.)+ [kJ/m²] | Wassergehalt + % |
|---|---|---|---|---|---|---|---|---|
| 1* | 2623 | 7,5 | 200 | 9,34 | weiß | 780 | 25 | 3,15 |
| 2* | 2755 | 6,0 | 181 | 7,42 | rotbraun | 873 | 20 | 2,46 |
| 3 | 3071 | 5,3 | 185 | 8,50 | weißlich | 862 | 32,3 | 2,48 |
| 4 | 3131 | 6,2 | 190 | 9,21 | weißlich | 1039 | 25,5 | 2,81 |
| 5 | 2891 | 6,2 | 193 | 8,81 | weißlich | 934 | 30,9 | 2,72 |
| 6 | 2874 | 8,0 | 192 | 8,00 | weißlich | 909 | 40,8 | 2,69 |
| 7 | 2896 | 6,8 | 197 | 7,78 | weißlich | 915 | 39,3 | 2,45 |
| 8 | 3189 | 6,0 | 195 | 8,46 | weißlich | 908 | 38,7 | 2,52 |

* Vergleichsversuche
\# Kerbschlagzähigkeit
\+ nach Konditionierung entsprechend ISO 1110

Die Prüfkörper gemäß Beispiel 3 - 6 sind beim Behandeln mit Warmwasser von 40 °C auswaschbeständig und weisen eine Verminderung der Wasseraufnahme sowie höhere Zähigkeiten und Biege-E-Module nach Konditionierung im Vergleich zu Beispiel 1 auf.

## Patentansprüche

**1.** Polymermischungen enthaltend
A) ein Polyamid und
B) ein Homo- oder Copolymerisat aus einem radikalisch polymerisierbaren Sulfonamidmonomeren und gegebenenfalls weiteren sulfonamidfreien Vinylmonomeren

**2.** Migrationsbeständige Polymermischungen gemäß Anspruch 1 enthaltend
A) 70 - 99 Gew.-% eines thermoplastischen Polyamids und
B) 30 - 1 Gew.-% eines Homo- oder Copolymerisats aus einem radikalisch polymerisierbaren Sulfonamidmonomeren und gegebenenfalls sulfonamidfreien Vinylmonomeren.

**3.** Polymermischungen gemäß Ansprüche 1 und 2, dadurch gekennzeichnet, daß die Sulfonamidmonomere
Vinylmonomere mit Struktureinheiten der Formel (I)

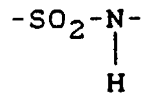

sind.

**4.** Polymermischungen gemäß Ansprüche 1 bis 3, dadurch gekennzeichnet, daß die Sulfonamidmonomere in B)
Vinylmonomere der Formel (II) und (III) sind.

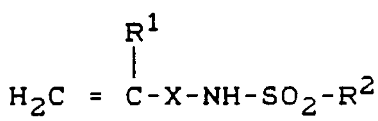 (II)

mit
$R^1$ = H, Methyl
X = Einfachbindung, $C_1$-$C_8$-Alkylen, zweiwertiger aromatischer Kohlenwasserstoffrest mit 6 - 25 Kohlenstoffatomen,

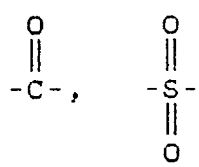

$R^2$ = $C_1$-$C_{12}$-Alkyl, einwertiger aromatischer Kohlenwasserstoffrest mit 6 - 25 Kohlen stoffatomen

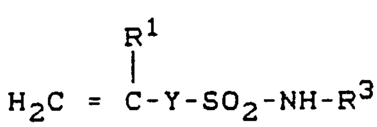 (III)

mit

$R^1$ = H, Methyl

Y = Einfachbindung, $C_1$-$C_8$-Alkylen, zwei wertiger aromatischer Kohlenwasser stoffrest mit 6 - 25 Kohlenstoffatomen

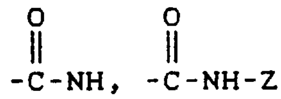

mit Z als zweiwertigen aromatischen Kohlenwasserstoffrest mit 6 - 25 Kohlenstoffatomen,

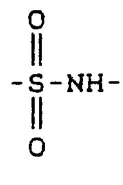

$R^3$ = Wasserstoff, $C_1$-$C_{12}$-Alkyl, einwertiger aromatischer Kohlenwasserstoffrest mit 6 - 25 Kohlenstoffatomen,

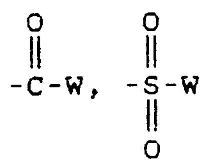

wobei

W = $C_1$-$C_{12}$-Alkyl oder ein einwertiger aromatischer Kohlenwasserstoffrest mit 6-25 Kohlenstoffatomen ist.

**5.** Polymermischungen nach Ansprüchen 2 - 4, dadurch gekennzeichnet, daß sie
A) 85 - 97,5 Gew.-% eines thermoplastischen Polyamids und
B) 15 - 2,5 Gew.-% eines Homo- oder Copolymerisats aus einem radikalisch polymerisierbaren Sulfonamidmonomeren und gegebenenfalls weiteren, sulfonamidfreien Monomeren enthalten.

**6.** Verwendung der Polymermischungen gemäß Ansprüchen 1 bis 5 zur Herstellung von thermoplastischen, migrationsbeständigen Formmassen.

**Claims**

**1.** Polymer blends containing
A) a polyamide and
B) a homopolymer or copolymer of a radical-polymerizable sulfonamide monomer and, optionally, other sulfonamide-free vinyl monomers.

**2.** Migration-resistant polymer blends as claimed in claim 1 containing
A) 70-99% by weight of a thermoplastic polyamide and
B) 30 to 1% by weight of a homopolymer or copolymer of a radical-polymerizable sulfonamide monomer and, optionally, other sulfonamide-free vinyl monomers.

**3.** Polymer blends as claimed in claims 1 and 2, characterized in that the sulfonamide monomers are vinyl monomers containing structural units corresponding to formula (I)

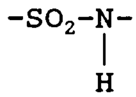 (I)

4. Polymer blends as claimed in claims 1 to 3, characterized in that the sulfonamide monomers in B) are vinyl monomers corresponding to formulae (II) and (III):

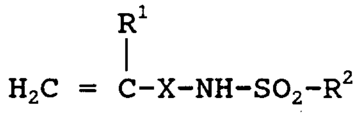 (II)

in which

$R^1$ = H, methyl

X = single bond, $C_{1-8}$ alkylene, difunctional aromatic $C_{6-25}$ hydrocarbon radical,

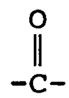, 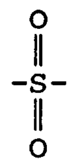

$R^2$ = $C_{1-12}$ alkyl, monofunctional aromatic $C_{6-25}$ hydrocarbon radical

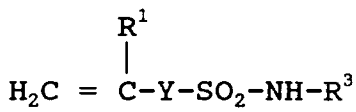 (III)

with

$R^1$ = H, methyl

Y = single bond, $C_{1-8}$ alkylene, difunctional aromatic $C_{6-25}$ hydrocarbon radical,

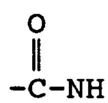, 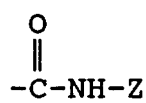

where Z = difunctional aromatic $C_{6-25}$ hydrocarbon radical,

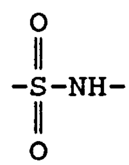

$R^3$ = hydrogen, $C_{1-12}$ alkyl, monohydric aromatic $C_{6-25}$ hydrocarbon radical,

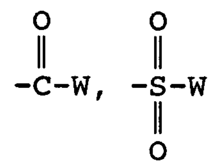

where

W = $C_{1-12}$ alkyl or a monofunctional aromatic $C_{6-25}$ hydrocarbon radical.

**5.** Polymer blends as claimed in claims 2 to 4, characterized in that they contain

A) 85 to 97.5% by weight of a thermoplastic polyamide and

B) 15 to 2.5% by weight of a homopolymer or copolymer of a radical-polymerizable sulfonamide monomer and, optionally, other sulfonamide-free vinyl monomers.

**6.** The use of the polymer blends claimed in claims 1 to 5 for the production of thermoplastic, migration-resistant moulding compounds.

**Revendications**

**1.** Mélanges de polymères, contenant

A) un polyamide et

B) un homopolymère ou un copolymère d'un monomère sulfonamidique polymérisable par voie radicalaire et le cas échéant d'autres monomères vinyliques ne contenant pas de sulfonamide.

**2.** Mélanges de polymères stables à la migration suivant la revendication 1, contenant

A) 70 à 99 % en poids d'un polyamide thermoplastique et

B) 30 à 1 % en poids d'un homopolymère ou d'un copolymère d'un monomère sulfonamidique polymérisable par voie radicalaire et le cas échéant de monomères vinyliques ne contenant pas de sulfonamide.

**3.** Mélanges de polymères suivant les revendications 1 et 2, caractérisés en ce que les monomères sulfonamidiques sont des monomères vinyliques portant des motifs structuraux de formule (I)

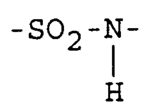

**4.** Mélanges de polymères suivant les revendications 1 à 3, caractérisés en ce que les monomères sulfonamidiques dans B) sont des monomères vinyliques de formules (II) et (III)

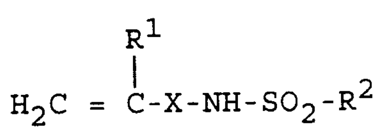 (II)

où

$R^1$ représente l'hydrogène ou un groupe méthyle,

X est une liaison simple, un groupe alkylène en $C_1$ à $C_8$, un reste d'hydrocarbure aromatique divalent ayant 6 à 25 atomes de carbone,

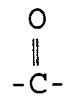 , 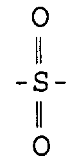

$R^2$ est un groupe alkyle en $C_1$ à $C_{12}$, un reste d'hydrocarbure aromatique monovalent ayant 6 à 25 atomes de carbone

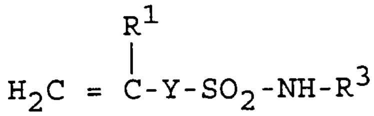 (III)

où

$R^1$ est de l'hydrogène ou un groupe méthyle

Y est une liaison simple, un groupe alkylène en $C_1$ à $C_8$, un reste divalent d'hydrocarbure aromatique ayant 6 à 25 atomes de carbone,

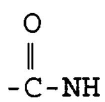 , 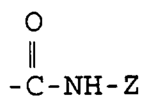

où Z est un reste divalent d'hydrocarbure aromatique ayant 6 à 25 atomes de carbone,

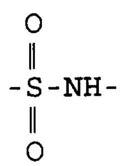

$R^3$ est de l'hydrogène, un groupe alkyle en C à $C_{12}$, un reste d'hydrocarbure aromatique monovalent ayant 6 à 25 atomes de carbone,

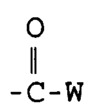 , 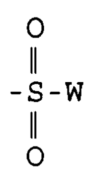

où W est un groupe alkyle en $C_1$ à $C_{12}$ ou un reste monovalent d'hydrocarbure aromatique ayant 6 à 25 atomes de carbone.

**5.** Mélanges de polymères suivant les revendications 2 à 4, caractérisés en ce qu'ils contiennent
A) 85 à 97,5 % en poids d'un polyamide thermoplastique et
B) 15 à 2,5 % en poids d'un homopolymère ou d'un copolymère d'un monomère sulfonamidique polymérisable par voie radicalaire et le cas échéant d'autres monomères dépourvus de sulfonamide.

**6.** Utilisation des mélanges de polymères suivant les revendications 1 à 5 pour la production de compositions à mouler thermoplastiques stables à la migration.